(19) Europäisches Patentamt / European Patent Office / Office européen des brevets

(11) **EP 1 453 616 B1**

(12) **EUROPÄISCHE PATENTSCHRIFT**

(45) Veröffentlichungstag und Bekanntmachung des Hinweises auf die Patenterteilung:
**05.05.2010 Patentblatt 2010/18**

(51) Int Cl.:
**B07C 5/16** (2006.01)

(21) Anmeldenummer: **02779178.9**

(22) Anmeldetag: **25.10.2002**

(86) Internationale Anmeldenummer:
**PCT/DE2002/004013**

(87) Internationale Veröffentlichungsnummer:
**WO 2003/047774 (12.06.2003 Gazette 2003/24)**

(54) **VERFAHREN ZUR OBJEKTKLASSIFIZIERUNG NACH GEWICHT DES OBJEKTS IN EINEM FAHRZEUG**

METHOD FOR THE OBJECT CLASSIFICATION IN A VEHICLE

PROCEDE POUR LA CLASSIFICATION D'OBJET DANS UN VEHICULE

(84) Benannte Vertragsstaaten:
**AT BE BG CH CY CZ DE DK EE ES FI FR GB GR IE IT LI LU MC NL PT SE SK TR**

(30) Priorität: **30.11.2001 DE 10159055**

(43) Veröffentlichungstag der Anmeldung:
**08.09.2004 Patentblatt 2004/37**

(73) Patentinhaber: **ROBERT BOSCH GMBH**
**70442 Stuttgart (DE)**

(72) Erfinder:
• **LICH, Thomas**
**71409 Schwaikheim (DE)**

• **MACK, Frank**
**70376 Stuttgart (DE)**

(56) Entgegenhaltungen:
**EP-A- 0 354 339      DE-A- 10 047 190**
**US-A- 5 890 085      US-A1- 2001 054 516**
**US-B1- 6 253 134**

• **PATENT ABSTRACTS OF JAPAN Bd. 2000, Nr. 17, 5. Juni 2001 (2001-06-05) & JP 8 290751 A (ROCKWELL INTERNATL CORP), 5. November 1996 (1996-11-05)**

EP 1 453 616 B1

**Beschreibung**

Stand der Technik

Die Erfindung geht aus von einem Verfahren zur Objektklassifizierung in einem Fahrzeug nach der Gattung des unabhängigen Patentanspruchs.

Aus der gattungsbildenden Offenlegungsschrift WO 01/18515 A1 ist bereits eine Sensoreinrichtung und ein Verfahren zur Abfrage einer Sensoreinrichtung bekannt, bei der über druckabhängige Widerstände eine Objektklassifizierung anhand des Gewichts erfolgt, wobei ein Sensorarray vorhanden ist, das einzelne Sensorelemente aufweist und im Sitz angeordnet ist. Weiterhin ist ein Prozessor zur Auswertung des Sensorsignals und zur Objektklassifizierung vorhanden.

Aus DE 100 47 190 ist es bekannt, ein Verfahren bzw. eine Vorrichtung zur Auswertung von Sensorsignalen von einer Sitzmatte in einem Fahrzeugsitz vorzusehen. Die Sensoren in der Sitzmatte können als aktiv oder inaktiv gekennzeichnet werden. Damit wird ein lineares Auswerteverfahren geschaffen, dass dazu dient, eine Gewichtsklassifikation von auf dem Sitz befindlichen Insassen zu ermöglichen. Dafür wird mit den aktiven und inaktiven Sensoren ein Sitzprofil erstellt. Aus Patents Abstracts of Japan JP 08290751 ist es bekannt, einen Bildsensor zu verwenden, um Insassen in einem Fahrzeug zu klassifizieren. Dies wird dazu verwendet, um zu entscheidet, ob ein Airbag angesteuert werden soll oder nicht. Der Bildsensor umfasst einen optischen Feldsensor mit Auswerteelektronik und einer Linse. Das Gesicht der Insassen in der Fahrzeugfront in der Sitzkabine wird erfasst. Es wird entschieden, ob ein Kind in einem Kindersitz rückwärtig sich auf dem Sitz befindet. Aus US 6,253,134 B1 sind eine Vorrichtung und ein Verfahren der Identifizierung von Objekten in einem Fahrzeug und die Anpassung von Fahrzeugkomponenten darauf bekannt. Dafür wird ein wellenempfangender Sensor verwendet, der Wellen von einem Raum oberhalb des Sitzes empfängt und ein Ausgabesignal in Abhängigkeit davon ausgibt. Auch das Gewicht, dass auf den Sitz ausgeübt wird, wird gemessen und ein entsprechendes Ausgabesignal erzeugt. Diese Ausgabesignale werden verarbeitet, um den Sitzstatus zu bestimmen und festzulegen, ob der Sitz besetzt ist und die Identifizierung des Objekts entsprechend durchzuführen. Aus EP 0 354 339 ist eine elektronische Glasierwaage bekannt. Die Messwertaufnehmer, die nachgeschaltete digitale Filter aufweist und das Signal der Messwertaufnehmer mit gespeicherten Grenzgewichten vergleicht und bei Stillstand je nach Ergebnis dieses Vergleichs eines der Signale Probegewicht unterhalb des unteren Grenzgewichts, Probegewicht zwischen den beiden Grenzgewichten oder Probegewicht oberhalb des oberen Grenzgewichts ausgibt. Aus US 5,890,085 ist ein Verfahren zur Bestimmung des Insassenzustands und entsprechende Computerprogramme bekannt. Dieses System ist für die Erfassung der Präsenz der Produktion und einer Typenklassifikation eines Fahrzeuginsassen auf einem Fahrzeugsitz ausgebildet. Das Sensorsystem verwendet eine Sensorfunktion, d. h. ein Verfahren, das Informationen von zwei oder mehreren Sensoren kombiniert, wobei sich die Sensoren von einander unterscheiden.

Vorteile der Erfindung

Das erfindungsgemäße Verfahren zur Objektklassifizierung in einem Fahrzeug mit den Merkmalen des unabhängigen Patentanspruchs 1 haben demgegenüber den Vorteil, dass durch die Unterabtastung der Sensorinformation in eine geringere Auflösung eine erhöhte Robustheit gegenüber der im System befindlichen Toleranzen, welche durch die Sensorelemente, den Sitzschaum, den Bezug, Fehler bei der Datenerfassung usw. verursacht werden, erreicht wird. Diese Unterabtastung muß dabei so gewählt werden, dass das Systemrauschen verschwindet.

Unter der Unterabtastung wird hier eine Aufteilung der Sensorwerte, die digital vorliegen, beispielsweise in einem 8-bit-Wort, verstanden, wobei dann für einzelne Bereiche des 8-bit-Worts Werte festgelegt werden, die für die einzelnen Bereiche für jedes Sensorelement festgelegt werden. Diese Werte für jedes Sensorelement werden dann miteinander verglichen und in Abhängigkeit von diesem Vergleich wird ein Merkmal ermittelt, das zur Objektklassifizierung verwendet wird. Dieses Merkmal, das auch als HV (Human Volume) bezeichnet wird, enthält ein abstraktes Maß für das Volumen, welches durch das auf dem Sitz befindliche Objekt verursacht wird. Dieses Merkmal kann zur Gewichtsschätzung herangezogen werden.

Diese Gewichtsschätzung kann dann weiter mit anderen Merkmalen zur Klassifizierung herangezogen werden. Es ist jedoch möglich, dass auch allein dieses Merkmal zur Klassifizierung verwendet wird. Dass für jedes Sensorelement für jeden Bereich ein jeweiliger Wert zugeordnet wird, entstehen Matrizen für die Sensorelemente, wobei die Anzahl der Matrizen gleich der der Bereiche ist.

Durch einen Vergleich von benachbarten Werten eines Sensorelements aus den verschiedenen Matrizen wird das Merkmal bestimmt und kann so als ein Volumenmaß verstanden werden. Liegt ein hoher 8-bit-Wert vor und demnach ein hoher Druck auf dem Sitz und dem jeweiligen Sensorelement, dann ist anzunehmen, dass das Objekt voraussichtlich ein großes Volumen oder eine entsprechende Höhe auf dem Sitz aufweist. Wird mit dem Wert des kleinsten Bereichs begonnen, um den Vergleich zwischen den Werten der einzelnen Bereichen für ein Sensorelement durchzuführen, dann kann sukzessiv festgestellt werden, wie hoch der Druck auf dem Sensorelement ist.

Besonders vorteilhaft ist, dass das Sensorsignal der einzelnen Sensorelemente vor dem Vergleich mit den Bereichsgrenzen digitalisiert wird, so dass dann beispielsweise ein 8-bit-Wort vorliegt.

Das hier berechnete Merkmal kann auch direkt zu einer Gewichtsschätzung verwendete werden. Das Merkmal weist zur Masse eines Objekts eine nichtlineare Beziehung auf, die durch ein Polynom n-ter Ordnung beschrieben wird.

Das hier ermittelte Merkmal kann mit anderen Merkmalen wie beispielsweise dem Sitzbeinhöckerabstand oder der belegten Fläche auf dem Sitz verknüpft werden, um so zu einer noch robusteren Aussage und damit Objektklassifizierung zu kommen.

Zeichnung

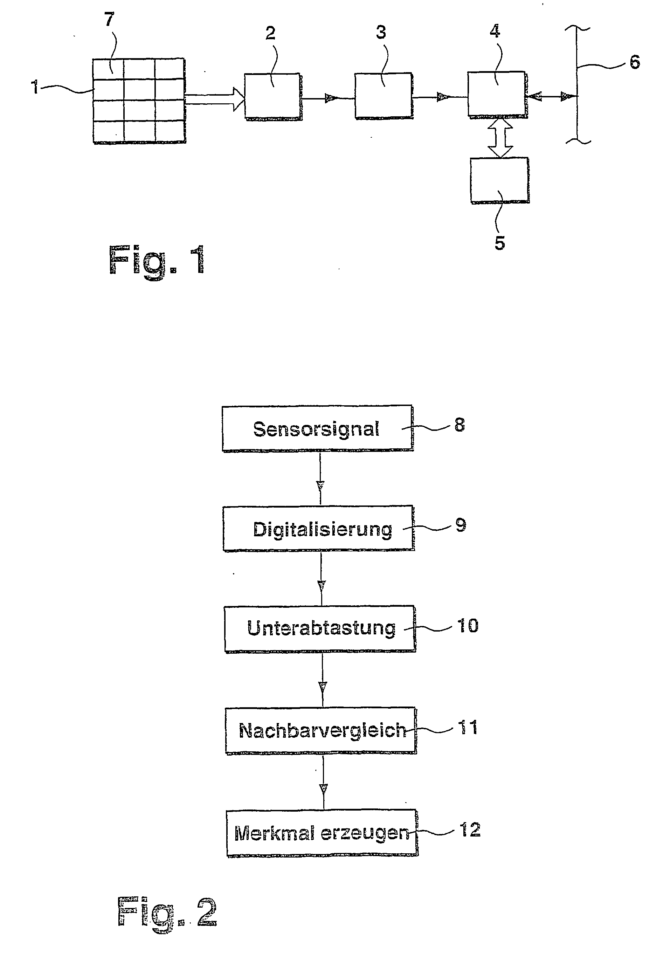

Ausführungsbeispiele der Erfindung sind in der Zeichnung dargestellt und werden in der nachfolgenden Beschreibung näher erläutert. Es zeigt Figur 1 ein Blockschaltbild der erfindungsgemäßen Vorrichtung und Figur 2 ein Flußdiagramm des erfindungsgemäßen Verfahrens.

Beschreibung

Bei vielen Fahrzeugherstellern wird derzeit eine Sitzmatte verwendet, die einzelne Sensorelemente aufweist, die einen druckabhängigen Widerstand aufweisen. Aus Gründen großer Toleranzen läßt sich die gelieferte Druckinformation eines Sensorelements nicht direkt auswerten, da sonst große Abweichungen im Systemverhalten zu erwarten sind. Erfindungsgemäß wird diese Druckinformation auf einem abstrakteren Niveau für den Objektklassifizierungs-Algorithmus zur Verfügung gestellt. Der Kern der Erfindung besteht darin, das Sensorsignal, welches üblicherweise in einem 8-bit-Wort vorliegt und in eine dezimale Größe gewandelt wird, in einen anderen Wertebereich zu transformieren. Diese Transformation besteht darin, das 8-bit-Signal (Wertebereich 0 bis 255) abzutasten und in einem Wertebereich von > 2 zu transformieren. Im weiteren wird diese erhaltene Information in eine logische Verknüpfung mit Zeilen und Spalten gebracht, welches ein Merkmal zu seiner Klassifizierung liefert. Das dabei enthaltene Merkmal wird als Human Volume bezeichnet. Es enthält nach der Berechnung ein abstraktes Maß für das Volumen, welches durch das auf dem Sitz befindliche Objekt verursacht wird.

Die Funktion zur Berechnung des Merkmals beruht im wesentlichen auf der Unterabtastung als auch auf der logischen Verknüpfung einzelner Zeilen und Spalten der durch die Unterabtastung erhaltenen Tiefeninformation des Sitzprofils. Dabei wird in unterschiedlichen Stufen das Profil überarbeitet und entsprechende Summationen durchgeführt.

Zunächst wird ein sogenannter Höhenvektor definiert. Dieser kann eine Dimension $\geq 2$ besitzen. Im Beispiel erhält der Höhenvektor H sechs Dimensionen: (z0, z1, z2, z3, z4, z5). In einem Zahlenbeispiel: (0 75 110 168 200 255) und liegt im Wertebereich von 0 bis 250. Dies entspricht der Auflösung des Analog-Digital-Wandlers von 8 Bit.

Dieser Vektor definiert die Unterabtastgrenzen. Im Beispiel wurde das resultierende unterabgetastete neue Profil folgende Dimension enthalten:

$$\text{m Zeilen (9) x l Spalten (12) x z Höhen (5)}$$

Diese mehrdimensionale Matrix wird zu Beginn mit "Nullen" initialisiert.

Die Erstellung des neuen unterabgetasteten Profils funktioniert im Prinzip wie folgt:

Man durchläuft das gesamt erfaßte Sitzprofil durch die einzelnen Sensorelemente in seinen l Spalten und m Zeilen, wobei jedes Matrixelement ein Sensorelement, also einen druckabhängigen Widerstand, darstellt. Dabei wird geprüft, in welchen Wertebereich der aktuelle Wert k zu dem angegebenen Höhenvektor h fällt. Der zugeordnete Wertebereich wird dann für die Zelle i und Spalte j in der Höhe z in der mehrdimensionalen Matrix M mit 1 beschrieben.

Als Berechnungsvorschrift lautet die Zuordnung:

$$V(i,j) = k \rightarrow \underline{h}(z) <= k <= \underline{h}(z+1) \rightarrow$$
$$M(z,i,j)=1 \text{ mit } i=1..m; \; j=1..l; \; z=1..dim(\underline{h})-1$$

Im Zahlenbeispiel:

```
V(3,4) = 123 -> 110 <= 123 < 168 -> z=3;      -> M(3,3,4) = 1;
```

Die daraus resultierende mehrdimensionale Matrix enthält nun ein Höhenprofil in unterabgetasteter Form des aktuellen Sitzprofils, wobei hohe Drücke im erfaßten Sitzprofil nun auf die entsprechende Dimension des Höhenvektors, bezogen mit dem Wert 1, versehen wird. Auch andere Arten der Speicherung sind hier prinzipiell möglich.

Zur Berechnung des Human Volume-Merkmals wird zunächst ein HV-Zähler auf "Null" gesetzt. Ausgehend von der erhaltenen Matrix M wird diese in ihren einzelnen Dimensionen elementeweise durchlaufen. Bei der aktuellen Betrachtung der Höhe z, der Zeile i und der Spalte j wird nun überprüft, ob es von Null-verschiedene Nachbarn gibt. Fall ja, dann wird der HV-Zähler um eine frei wählbare Zahl erhöht. Im Beispiel:

```
HVZaehler = 0;
```

Durchlaufe die aktuelle Matrix M

$$z=1...dim(\underline{h})-1$$
$$i=1...m$$
$$j=1..l$$

Wenn das aktuelle Element M(z,i,j) > 0 ist dann prüfe die Nachbarn

```
Wenn M(z,i,j+1) > 0; HVZaehler = HVZaehler + 1;
Wenn M(z,i,j-1) > 0; HVZaehler = HVZaehler + 1;
Wenn M(z,i+1,j) > 0; HVZaehler = HVZaehler + 1;
Wenn M(z,i-1,j) > 0; HVZaehler = HVZaehler + 1;
Wenn M(z+1,i,j) > 0; HVZaehler = HVZaehler + 1;
Wenn M(z-1,i,j) >0 ; HVZaehler = HVZaehler + 1;
```

Sonst nichts

Der erhaltene HV-Zählerwert entspricht nach dem Durchlaufen einem Maß für das auftretende Volumen des auf dem Sitz befindlichen Objekts. Es wurde bewußt darauf verzichtet, eine konkrete Voluminaangabe zu berechnen, da dies prinzipiell nur reinen formalen Charakter hätte, indem man eine volumenmäßige Größe für die Verdrängung berücksichtigen würde. Hinsichtlich des Addierens des Werts kann natürlich auch eine von "Null" verschiedene positive Zahl verwendet werden.

Figur 1 zeigt als Blockschaltbild die erfindungsgemäße Vorrichtung. Ein Sensor-Array 1 weist in Zeilen und Spalten Sensorelemente 7 auf. Diese Sensorelemente sind druckabhängige Widerstände, die beispielsweise bei einem erhöhten Gewichtsdruck einen geringeren Widerstand aufweisen. Verschiedene druckabhängige Medien sind hier möglich. Das Sensor-Array ist an einem Meßverstärker 2 angeschlossen. An den Ausgang des Meßverstärkers ist ein AD-Wandler 3 angeschlossen. Der Meßverstärker 2 verstärkt das Sensorsignal der einzelnen Sensorelemente, das der analoge Digitalwandler 3 digitalisiert. Das digitalisierte Signal führt dann zu einem Prozessor 4, auf dem das erfindungsgemäße Verfahren abläuft. Dazu verwendet der Prozessor 4 über einen Daten-Ein-Ausgang einen Speicher 5. Beim zweiten Daten-Ein-Ausgang ist der Prozessor 4 über eine Leitung 6, die ein Bus sein kann, mit weiteren Komponenten im Fahrzeug verbunden, die diese Objektklassifizierung benötigen, beispielsweise das Air-Bag-Steuergerät.

Figur 2 zeigt das erfindungsgemäße Verfahren als Flußdiagramm. Im Verfahrensschritt 8 wird durch die einzelnen Sensorelemente 7 das Sensorsignal jeweils erzeugt. Das Sensorsignal wird dann mit dem Verstärker 2 verstärkt. Durch den Analog-Digital-Wandler 3 erfolgt in Verfahrensschritt 9 die Digitalisierung des Sensorsignals. Über den Prozessor 4 folgt dann die Unterabtastung, die durch eine Transformation des Sensorsignals in einen anderen Wertebereich erfolgt. Dies wird dadurch durchgeführt, dass der zur Verfügung stehende Wertebereich für das Sensorsignal in Bereiche aufgeteilt wird. Das tatsächliche Sensorsignal digitaler Form wird dann mit den Bereichsgrenzen verglichen und für das Überschreiten jeder Bereichsgrenze erhält das Sensorelement jeweils einen Wert.

So dass am Ende für jedes Sensorelement soviel Werte vorhanden sind, wie es Bereiche gibt. Weil dies für jedes Sensorelement durchgeführt wird, liegen dreidimensionale Matrizen vor, deren Länge und Breite sich nach der Anzahl der Sensorelemente richtet und die Höhe nach der Anzahl der Bereiche.

Im Verfahrensschritt 11 erfolgt dann der Nachbarvergleich der Wert der einzelnen Sensorelemente. Beispielsweise erhalten die Sensorelemente für ein Sensorsignal, das einen Bereich erreicht, eine "Eins" in der entsprechenden Matrix. Wird dieser Bereich nicht erreicht und demnach auch alle folgenden nicht, dann erhält dieses Sensorelement in dieser und in den folgenden Matrixen eine "Null". Bei dem Nachbarvergleich wird nun überprüft, ob "Einsen" oder "Nullen" vorliegen, beispielsweise durch eine logische UND-Verknüpfung. Für eine "Eins" am Ausgang der UND-Verknüpfung wird ein Merkmalszähler, der HV-Zähler, um "Eins" oder einen anderen Wert inkrementiert. Liegt am Ausgang der UND-Funktion eine "Null" , dann wird der HV-Zähler nicht erhöht. Nach allen Vergleichen gibt der HV-Zähler das Merkmal an, so dass im Verfahrensschritt 12 dann das Merkmal vorliegt. Durch Anwendung eines vorgegebenen nichtlinearen Polynoms ist die Zuordnung des HV-Zählers zu einem Gewicht für das Objekt möglich.

## Patentansprüche

1. Verfahren zur Objektklassifizierung in einem Fahrzeug, wobei das Objekt anhand seines Gewichts klassifiziert wird, wobei ein Sensor-Array (1) mit Sensorelementen (7) im Sitz zur Erkennung eines Gewichtsdrucks eines auf dem Sitz befindlichen Objekts und ein Prozessor (4) zur Auswertung des Sensorsignals und zur Objektklassifizierung verwendet wird, **dadurch gekennzeichnet, dass** das Sensorsignal des jeweiligen Sensorelements mit Unterabtastgrenzen verglichen wird, wobei die Unterabtastgrenzen als jeweilige Höhen in einem Höhenvektor definiert werden, und dabei geprüft wird, in welchem Wertebereich, der durch die jeweiligen Unterabtastgrenzen definiert wird, das Sensorsignal fällt, dass der so zugeordnete Wertebereich für das jeweilige Sensorelement in einer jeweiligen Zeile und einer jeweiligen Spalte und der zugeordneten Höhe in einer mehrdimensionalen Matrix (M) mit Eins beschrieben wird, wobei die Matrix (M) mit Null an jedem Matrixelement initialisiert wird, dass ein mit Null initialisierter Zähler erhöht wird, wenn beim Durchlaufen der Matrix Nachbarmatrixelemente zu einem jeweiligen Matrixelement, das größer als Null ist, von Null verschiedene Werte aufweisen, und dass ein Zählerwert des Zählers nach dem Durchlaufen einem Maß für ein auftretendes Volumen des auf dem Sitz befindlichen Objekts entspricht.

2. Verfahren nach Anspruch 1, **dadurch gekennzeichnet, dass** das digitalisierte Sensorsignal der einzelnen Sensorelemente (7) digitalisiert wird, bevor das Sensorsignal mit den Unterabtastgrenzen verglichen wird.

## Claims

1. Method for object classification in a vehicle, wherein the object is classified using its weight, wherein a sensor array (1) with sensor elements (7) in the seat is used to identify a weight pressure from an object situated on the seat and a processor (4) is used to evaluate the sensor signal and for object classification, **characterized in that** the sensor signal from the respective sensor element is compared with undersampling limits, wherein the undersampling limits are defined as respective heights in a height vector, and in this case a check is performed to determine the value range, defined by the respective undersampling limits, which contains the sensor signal, **in that** the value range associated in this manner for the respective sensor element in a respective row and in a respective column and at the associated height in a multidimensional matrix (M) is described by unity, wherein the matrix (M) is initialized with zero at each matrix element, **in that** a counter initialized with zero is increased if adjacent matrix elements for a respective matrix element which is greater than zero have values different from zero upon passing through the matrix, and **in that** after the pass a counter value on the counter corresponds to a measure of a volume arising for the object situated on the seat.

2. Method according to Claim 1, **characterized in that** the digitized sensor signal from the individual sensor elements (7) is digitized before the sensor signal is compared with the undersampling limits.

## Revendications

1. Procédé de classification d'objets dans un véhicule, l'objet étant classé sur la base de son poids, le procédé utilisant une batterie (1) de détecteurs qui présente des éléments de détection (7) dans le siège pour détecter la poussée du poids d'un objet placé sur le siège et un processeur (4) d'évaluation du signal des détecteurs et pour classifier l'objet,

**caractérisé en ce que**

le signal de détection de chaque élément de détection est comparé à des limites inférieures d'exploration, les limites inférieures d'exploration étant définies comme hauteurs correspondantes dans un vecteur de hauteur pour ainsi vérifier dans quelle plage de valeurs définies par les limites inférieures d'exploration concernées le signal de détection est situé,

**en ce que** la plage de valeurs ainsi associée à chaque élément de détection est inscrite dans une ligne correspondante et une colonne correspondante et la hauteur associée est décrite par un "un" dans une matrice multidimensionnelle (M),

**en ce que** chaque élément de la matrice (M) est initialisé à zéro,

**en ce qu'**un compteur lancé à zéro est incrémenté si, lorsque la matrice est parcourue, des éléments de matrice voisins d'un élément de matrice supérieur à zéro présentent des valeurs différentes de zéro et

**en ce qu'**après le balayage, la valeur de comptage du compteur correspond à une mesure du volume de l'objet placé sur le siège.

2. Procédé selon la revendication 1, **caractérisé en ce que** le signal de détection numérisé des différents éléments de détecteurs (7) est numérisé avant que le signal de détection soit comparé aux limites inférieures d'exploration.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0118515 A1
- DE 10047190
- JP 08290751 B

- US 6253134 B1
- EP 0354339 A
- US 5890085 A